# FASCICULE DE BREVET EUROPEEN

(11) **EP 2 711 176 B1**
(45) Date de publication et mention de la délivrance du brevet: **10.06.2015**
(21) Numéro de dépôt: 13447016.0
(22) Date de dépôt: 19.09.2013
(51) Int. Cl.: B32B 17/10, B32B 37/06, B32B 37/10

(54) **Procédé pour l'assemblage de feuilles de matériaux et poche pour sa mise en oeuvre**
Verfahren zum Zusammenbau von Materialblättern, und Tasche für die Umsetzung dieses Verfahrens
Method for assembling sheets of materials and bag for implementing same

(30) Priorité: 20.09.2012 BE 201200624
(43) Date de publication de la demande: 26.03.2014
(73) Titulaire: Simtech S.P.R.L., 7503 Froyennes (BE)
(72) Inventeur: Vandromme, Pascal, F-59830 Cysoing (FR)
(74) Mandataire: Balesta, Pierre

(56) Documents cités:
- EP-A2- 0 331 648
- FR-A1- 2 760 400
- US-A- 2 714 567
- US-A1- 2011 290 417

## Description

La présente invention se rapporte, d'une manière générale, à un procédé pour l'assemblage de feuilles de matériaux en une structure multi-couches nécessitant un chauffage sous vide pour cet assemblage ainsi qu'à une poche pour sa mise en oeuvre.

Plus particulièrement, l'invention concerne une méthode pour l'assemblage de feuilles de matériaux en une structure multi-couches comprenant une première et une seconde faces latérales, en particulier une structure formée de une ou plusieurs unités comprenant chacune deux feuilles de matériaux situées de part et d'autre d'une couche adhésive, ce procédé nécessitant un chauffage sous vide dans une poche étanche et autonome comprenant une première et une seconde parois extérieures souples assemblées en un contenant.

Une telle méthode est connue par exemple de US2011/0290417.

La fabrication de verre laminé se pratique habituellement en insérant les matériaux à assembler dans une poche souple de feuilletage puis en effectuant le vide à l'intérieur de celle-ci. Selon une certaine mise en oeuvre, cette poche est alors placée en autoclave et portée à une température de 130° à 150°C sous une pression d'environ 8 bars.

On a décrit dans la demande de brevet EP0331648 une modification de ce procédé lequel fait appel à un dispositif de feuilletage qui se présente sous la forme de deux plaques métalliques, par exemple en aluminium, reposant contre les faces extérieures des deux parois d'une poche contenant un ensemble de matériaux à laminer. Un grand nombre de résistances électriques, disposées sur les faces extérieures de ces plaques d'aluminium, permettent de chauffer celles-ci tandis qu'un boitier métallique réalisé sous forme de deux demi-coquilles complète ce dispositif. De préférence, chaque demi-coquille est solidarisée solidement à une des deux plaques et aux résistances chauffantes appropriées.

Dans le cadre de l'élaboration de la présente invention, on a modifié ce dispositif de feuilletage en remplaçant, au niveau des deux parois de la poche, les plaques métalliques munies de résistances électriques et ce, par un système de chauffage comprenant des éléments chauffants souples. Une poche ainsi modifiée est connue par exemple de US2714567.

Toutefois, on a observé que lorsque l'ensemble des matériaux à assembler en une structure multi-couches occupe ou pas la totalité du volume intérieur de cette poche, il existe, suite au chauffage de celle-ci, un risque de détérioration au niveau des rives représentées par les portions terminales des parois, ces portions adhérant l'une à l'autre par suite de la dépressurisation de cette poche. Cette détérioration provoque, par conséquent, une réduction de la durée de vie de la poche lorsque celle-ci est du genre réutilisable.

La présente invention a pour but de proposer un procédé du type indiqué précédemment, capable de pallier ces inconvénients en ce qu'il permet de réaliser un laminage de feuilles de matériaux, identiques ou différents, dans une poche munie d'un système de chauffage utilisant des éléments chauffants souples ou rigides sans détérioration des rives des parois de la poche lorsque celle-ci est dépressurisée et chauffée.

Pour atteindre ce but, le procédé de l'invention est, conformément à la revendication 1, **caractérisé en ce** qu'une seule desdites faces latérales de la structure multi-couches est chauffée jusqu'à une température compatible avec le feuilletage des matériaux à assembler.

En général, ce chauffage est entrepris soit après mise sous vide de l'intérieur de la poche soit pendant cette mise sous vide, la source de chaleur se trouvant à l'intérieur ou à l'extérieur de la poche.

Selon une mise en oeuvre du procédé selon l'invention, la face latérale de la structure multi-couches est chauffée par contact direct avec une source productrice de chaleur située à l'intérieur de la poche, c'est-à-dire sans intermédiaire disposé entre cette face latérale et cette source productrice de chaleur.

Toutefois, selon une mise en oeuvre préférée, la source productrice de chaleur se trouve à l'intérieur de la poche et chauffe la face latérale de la structure multi-couches par l'intermédiaire d'une paroi supplémentaire qui s'étend à l'intérieur de cette poche. Cette paroi supplémentaire est disposée entre la source de chaleur et ladite face latérale de la structure multi-couches.

Ainsi, selon une autre mise en oeuvre de ce procédé, la face latérale de la structure multi-couches est chauffée par l'intermédiaire de la paroi extérieure de la poche ou de la paroi qui s'étend à l'intérieur de celle-ci, ci-après « paroi intérieure », l'une ou l'autre étant située en regard de cette face latérale. Cette paroi extérieure est en contact avec une source productrice de chaleur située à l'extérieur de cette poche ou à l'intérieur de ladite paroi extérieure tandis que cette paroi intérieure est en contact avec une source productrice de chaleur située à l'intérieur de cette poche.

Habituellement, la surface chauffée de la paroi extérieure ou de la paroi intérieure de la poche dépend du volume de la structure multi-couches à former. Ainsi, la paroi concernée est chauffée sur la totalité de sa surface lorsque le volume de la structure multi-couches occupe sensiblement le volume intérieur utile de la poche. Au contraire, cette paroi extérieure ou cette paroi intérieure est chauffée, sur au moins une portion de sa surface, lorsque le volume de la structure multi-couches est inférieur au volume intérieur utile de la poche, la portion de paroi à chauffer étant située en regard de la structure multi-couches à l'intérieur de cette poche.

Selon un autre de ses objets, l'invention se rapporte à une poche pour la mise en oeuvre de la méthode décrite précédemment.

Cette poche, destinée à être dépressurisée, comprend une enveloppe qui prend la forme de deux parois extérieures constituées de feuilles souples superposées et assemblées de manière étanche. Cette enveloppe comporte au moins une fente de chargement et de déchargement ménagée entre deux bords libres de ces feuilles, ces bords étant adjacents et sensiblement parallèles.

D'autre part, à cette poche sera associé notamment un premier dispositif de chauffage et éventuellement un second dispositif de chauffage.

Ainsi, conformément à la revendication 7, l'invention se rapporte à une poche, qui comprend une première et une seconde parois extérieures souples assemblées en un contenant et qui est **caractérisée** en ce qu'elle comporte un premier dispositif de chauffage étant solidarisé à ladite poche ou disposé à l'intérieur de ladite poche en regard de la première paroi extérieure ou encore intégré auxdites parois extérieures souples et étant apte à chauffer la première face latérale de la structure multi-couches et éventuellement un second dispositif apte à chauffer la seconde face latérale de la structure multi-couches, étant entendu que les deux dispositifs de chauffage ne peuvent fonctionner en même temps.

Selon une variante, le premier dispositif de chauffage est situé à l'intérieur de la poche en regard de la première paroi extérieure tandis que le second dispositif de chauffage est situé à l'extérieur de celle-ci en regard de la seconde paroi extérieure ou intégré à cette seconde paroi extérieure.

### A. DISPOSITIFS DE CHAUFFAGE A L'EXTERIEUR DE LA POCHE

Dans un mode de réalisation, les premier et second dispositifs de chauffage peuvent être solidarisés à cette poche par l'intermédiaire d'un moyen de fixation approprié ou maintenus chacun dans une pochette souple, éventuellement amovible, solidarisée à ladite poche par le biais d'un moyen de fixation approprié et contenant éventuellement un moyen d'isolation thermique disposé entre le dispositif de chauffage et la portion de paroi de la pochette non en contact avec la poche.

Ainsi, selon cette variante du mode de réalisation précédent, la poche selon l'invention est **caractérisée en** ce qu'elle comporte :
a) un premier dispositif de chauffage :
   - **soit**: solidarisé à la première paroi extérieure par l'intermédiaire d'un moyen de fixation approprié et éventuellement recouvert par une première enveloppe d'isolation thermique,
   - **soit**: maintenu dans une première pochette souple, éventuellement amovible, solidarisée à cette poche par le biais d'un moyen de fixation approprié, cette pochette comportant une portion de paroi non en contact avec ladite poche,
   - **soit**: maintenu dans une première pochette formée par une portion de la première paroi extérieure de la poche et par un feuillet souple solidarisé à cette cette pochette comportant une portion de paroi non en contact avec ladite poche,
   - **soit**: maintenu dans une première pochette formée par une portion de la première paroi extérieure de la poche et par un feuillet souple solidarisé à cette portion de paroi extérieure,
   cette pochette contenant éventuellement un premier moyen d'isolation thermique disposé entre le premier dispositif de chauffage et ladite portion de paroi non en contact avec la poche ou entre le premier dispositif de chauffage et le feuillet,
   et éventuellement :
b) un second dispositif de chauffage :
   - **soit**: solidarisé à la seconde paroi extérieure par l'intermédiaire d'un moyen de fixation approprié et éventuellement recouvert par une seconde enveloppe d'isolation thermique,
   - **soit**: maintenu dans une seconde pochette souple, éventuellement amovible, solidarisée à cette poche par le biais d'un moyen de fixation approprié, cette pochette comportant une portion de paroi non en contact avec la poche,
   - **soit**: maintenu dans une seconde pochette formée par une portion de la seconde paroi extérieure de la poche et par un feuillet souple solidarisé à cette portion de paroi extérieure,
   cette pochette contenant éventuellement un second moyen d'isolation thermique disposé entre le second dispositif de chauffage et ladite portion de paroi non en contact avec la poche ou entre le second dispositif de chauffage et le feuillet, étant entendu que les deux dispositifs de chauffage ne peuvent fonctionner en même temps.

Dans cette variante, le moyen de fixation peut être représenté, par exemple, par un système adhésif, un système bouton/pression, un ensemble de bandelettes auto-agrippantes de type Velcro(R) ou encore une fermeture à glissière.

En outre, de manière à donner accès à l'intérieur de ces pochettes, celles-ci seront munies d'un moyen d'ouverture/fermeture pour l'introduction ou le retrait d'un dispositif de chauffage et éventuellement d'un moyen d'isolation thermique.

De même, lorsqu'un dispositif de chauffage est juxtaposé à une paroi extérieure de la poche et ce, en l'absence d'une pochette pour le contenir, ce dispositif de chauffage ainsi que les parois extérieures de cette poche et singulièrement la paroi chauffée, sont de préférence isolés de l'extérieur par un moyen externe d'isolation thermique, par exemple une enveloppe d'isolation thermique, afin d'éviter que la température à proximité extérieure des parois ne dépasse environ 40°C.

### B. DISPOSITIFS DE CHAUFFAGE A L'INTERIEUR DE LA POCHE

Selon un second mode de réalisation, la poche selon l'invention est **caractérisée en ce** qu'elle comporte, à l'intérieur d'elle-même, un premier dispositif de chauffage situé en regard de la première paroi extérieure et éventuellement un second dispositif de chauffage situé en regard de la seconde paroi extérieure, étant entendu que les deux dispositifs de chauffage ne peuvent fonctionner en même temps.

Toutefois, selon une variante de cet autre mode de réalisation de l'invention, une paroi supplémentaire de la poche est associée à la première paroi extérieure de celle-ci. Cette paroi supplémentaire s'étend à l'intérieur de cette poche à partir du pourtour de ladite paroi extérieure et forme ainsi une première paroi intérieure. Celle-ci coopère, en conséquence, avec la première paroi extérieure pour donner naissance à un logement apte à accueillir le premier dispositif de chauffage et éventuellement un premier moyen d'isolation thermique. Si nécessaire, une configuration semblable peut être adoptée au niveau de la seconde paroi extérieure de la poche qui, avec une seconde paroi intérieure crée ainsi un second logement capable de recevoir le second dispositif de chauffage et/ou un second moyen d'isolation thermique.

De manière à livrer accès à l'intérieur des logements ainsi crées, ceux-ci seront munis d'un moyen d'ouverture/ fermeture pour l'introduction ou le retrait d'un dispositif de chauffage et/ou d'un moyen d'isolation thermique.

En outre, la première paroi intérieure de la poche et, si elle est présente, la seconde paroi intérieure seront, de préférence, interposées entre respectivement soit le premier dispositif de chauffage et la structure multi-couches soit le second dispositif de chauffage et cette même structure multi-couches. Ces parois intérieures, qui seront solidarisées chacune à une paroi extérieure uniquement sur le pourtour de celle-ci, auront pour avantage d'éviter une éventuelle adhérence du système de chauffage à la structure multi-couches en raison de la chaleur produite.

En conséquence, selon une variante du mode de réalisation précédent, la poche selon l'invention est caractérisée en ce qu'elle comporte :
- un premier dispositif de chauffage juxtaposé à la première paroi extérieure ou séparé de celle-ci par un premier moyen d'isolation thermique et éventuellement une première paroi supplémentaire qui s'étend, à l'intérieur de cette poche, à partir du pourtour de cette première paroi extérieure formant ainsi un premier logement pour ce premier dispositif de chauffage et, lorsqu'il est présent, ce premier moyen d'isolation thermique,
   et éventuellement :
- un second dispositif de chauffage ou un second moyen d'isolation thermique, l'un ou l'autre juxtaposé à la seconde paroi extérieure, ou un second dispositif de chauffage séparé de celle-ci par un second moyen d'isolation thermique, et éventuellement une seconde paroi supplémentaire qui s'étend, à l'intérieur de cette poche, à partir du pourtour de cette seconde paroi extérieure formant ainsi un second logement pour ce second dispositif de chauffage et/ou ce second moyen d'isolation thermique ou ce second dispositif de chauffage et ce second moyen d'isolation thermique, étant entendu que les deux dispositifs de chauffage ne peuvent fonctionner en même temps.

D'autre part, le premier et, s'il est présent, le second dispositifs de chauffage d'une part ou, lorsqu'ils sont également présents, le premier et/ou le second moyen d'isolation thermique d'autre part, comporteront sur leurs faces, situées en regard des parois extérieures de la poche, une pluralité de reliefs aptes à permettre l'établissement d'un vide entre respectivement ces parois extérieures et les faces en question des dispositifs de chauffage ou des moyens d'isolation thermique. Généralement, ces reliefs conféreront un aspect gaufré aux faces concernées.

Dans ces premier et deuxième modes de réalisation de la poche selon l'invention, le premier dispositif de chauffage et, s'il est présent, le second dispositif de chauffage, peuvent être rapportés et juxtaposés de manière directe, c'est-à-dire sans intermédiaire, respectivement à la première et à la seconde parois extérieures de la poche. Cette juxtaposition s'opère à l'extérieur ou à l'intérieur de celle-ci.

Toutefois, lorsqu'ils sont rapportés à l'intérieur de cette poche, le premier dispositif de chauffage et, s'il est présent, le second dispositif de chauffage, peuvent être juxtaposés chacun également à un moyen d'isolation thermique respectivement à un premier moyen d'isolation et à un second moyen d'isolation. Ceux-ci seront eux-mêmes juxtaposés respectivement à la première paroi extérieure et à la seconde paroi extérieure de la poche.

En outre, qu'ils soient disposés à l'extérieur ou à l'intérieur de cette poche, le premier dispositif de chauffage et, s'il est présent, le second dispositif de chauffage peuvent y être solidarisés à demeure. Toutefois, selon un mode de réalisation préféré, ces dispositifs sont de préférence amovibles.

### C. DISPOSITIFS DE CHAUFFAGE INTEGRES AUX PAROIS DE LA POCHE

Selon un troisième mode de réalisation, la poche selon l'invention est **caractérisée en ce** qu'elle comporte un premier dispositif de chauffage situé à l'intérieur de sa première paroi extérieure et éventuellement un second dispositif de chauffage situé à l'intérieur de sa seconde paroi extérieure, étant entendu que les deux dispositifs de chauffage ne peuvent fonctionner en même temps.

Selon une variante du mode de réalisation précédent, la poche selon l'invention est **caractérisée en** ce qu'elle comporte :
- un premier dispositif de chauffage situé à l'intérieur de sa première paroi extérieure, cette paroi extérieure contenant éventuellement un premier moyen d'isolation thermique disposé entre le premier dispositif de chauffage et la portion de première paroi extérieure orientée vers l'extérieur de cette poche,
   et éventuellement :
- un second dispositif de chauffage situé à l'intérieur de sa seconde paroi extérieure, cette paroi extérieure contenant éventuellement un second moyen d'isolation thermique disposé entre le second dispositif de chauffage et la portion de seconde paroi extérieure orientée vers l'extérieur de cette poche, étant entendu que les deux dispositifs de chauffage ne peuvent fonctionner en même temps.

Habituellement, le premier dispositif de chauffage et, s'il est présent, le second dispositif de chauffage, se présentent chacun sous la forme d'un contenant souple qui loge un ou plusieurs éléments chauffants rigides ou souples et, idéalement, un moyen de régulation de la température qui règne à l'intérieur de la poche, tel qu'une sonde de température.

A titre d'exemple, chaque élément chauffant rigide peut être constitué d'une plaque métallique et d'une ou de plusieurs résistances électriques.

Toutefois, l'usage d'éléments chauffants souples est particulièrement préféré tels que par exemple une ou plusieurs résistances électriques ou encore un ou plusieurs cordons chauffants habituellement constitués chacun d'un câble métallique se terminant par une fiche électrique le tout gainé d'un isolant flexible. D'autres éléments chauffants souples entrant dans la réalisation des premier et second dispositifs de chauffage peuvent être également envisagés tels que par exemple:
- un ou plusieurs tapis chauffants généralement formés chacun d'une partie métallique très fine et chauffante recouverte d'une matière plastique, le raccordement à la source de courant électrique se faisant par câble muni à l'une de ses extrémités d'une prise de courant et à l'autre d'un moyen d'attache à la paroi de la poche par exemple une pirice,
- un ou plusieurs tissus chauffants, tels que par exemple un ou plusieurs tissus non métalliques, très fins et flexibles composés de fibres de carbone ou encore un ou plusieurs tissus en fibre de verre dans lesquels sont tissés des conducteurs en carbone.

Tel qu'explicité précédemment, les premier et second dispositifs de chauffage ne peuvent être utilisés simultanément. En fait, un seul dispositif de chauffage fonctionnera de manière à ne chauffer :
a) à partir de l'extérieur de la poche, qu'une seule de ses deux parois extérieures ou,
b) à partir de l'intérieur de cette poche, qu'une seule des deux parois latérales de la structure multi-couches ou qu'une seule paroi intérieure supplémentaire ou,
c) à partir de l'intérieur d'une paroi extérieure de cette poche, qu'une seule de ses deux parois extérieures.

En outre, lorsque ces premier et second dispositifs de chauffage sont présents, chacun d'eux sera autonome. Par conséquent, ceux-ci pourront être maintenus séparés ou, au contraire, solidarisés entre eux de manière à former un ensemble d'un seul tenant.

D'autre part, lorsque la poche est en relation avec un premier et un second dispositifs de chauffage, celle-ci sera munie d'un moyen capable d'inverser la source d'énergie productrice de chaleur, qui lui est reliée, afin de permuter le chauffage :
- de la première paroi extérieure ou de la première paroi intérieure de cette poche et le chauffage de respectivement la seconde paroi extérieure et la seconde paroi intérieure, et inversement, ou :
- de la première face latérale de la structure multi-couches et le chauffage de sa seconde face latérale, et inversement.

Selon une caractéristique particulière de l'invention, les éléments chauffants de chacun des premier et second dispositifs de chauffage pourront se retrouver, si nécessaire, au sein d'un contenant unique où ils seront cependant séparés l'un de l'autre.

Selon une autre caractéristique particulière de l'invention, les premier et second dispositifs de chauffage sont conçus pour chauffer, non simultanément, la totalité notamment d'une des parois extérieures de la poche lorsqu'ils sont juxtaposés à l'extérieur de celle-ci ou la totalité d'une des parois intérieures lorsqu'ils sont disposés à l'intérieur de cette poche.

Toutefois, selon une caractéristique supplémentaire de l'invention, ces premier et second dispositifs de chauffage chauffent, non simultanément, non pas la totalité de la paroi à chauffer mais une ou plusieurs portions de celle-ci, par exemple une portion centrale.

Dans un tel mode de réalisation, les premier et second dispositifs de chauffage peuvent être conçus de manière à pouvoir faire varier leur surface de chauffe, selon les nécessités, habituellement selon la surface de la structure multi-couches à chauffer. Ce mode de réalisation peut être envisagé lorsque le volume de la structure multi-couches à former est plus petit que le volume interne utile de la poche, la portion chauffée de cette paroi extérieure ou de cette paroi intérieure de la poche étant adaptée au volume de cette structure multi-couches.

D'autre part, selon une autre caractéristique de l'invention, les premier et second dispositifs de chauffage peuvent comprendre chacun plusieurs éléments chauffants individuels. Ces éléments chauffants peuvent être réunis en série ou, au contraire, réunis en parallèle de façon à chauffer individuellement différentes portions de la paroi à chauffer. Si nécessaire, ces éléments chauffants seront munis d'un interrupteur pour une alimentation en courant électrique. Un premier et un second dispositif de chauffage doués d'une telle caractéristique, peut correspondre, à titre d'exemple, à des éléments chauffants constitués de résistances électriques.

Au surplus, le moyen d'isolation thermique utilisé dans les divers modes de réalisation de la poche selon l'invention correspond, par exemple, à une feuille en fibre de verre et aluminium. Ce moyen d'isolation thermique aura pour avantage d'éviter le chauffage inutile d'une paroi de la poche et, en conséquence, d'éliminer des pertes calorifiques.

L'invention sera mieux comprise et d'autres buts, caractéristiques et avantages de celle-ci apparaîtront plus clairement au cours de la description explicative qui va suivre faite en référence aux dessins schématiques annexés donnés uniquement à titre d'exemples non limitatifs illustrant deux modes de réalisation de l'invention et dans lesquels :
- la Figure 1 est une représentation en coupe d'un mode de réalisation de la poche de feuilletage selon l'invention, cette poche étant munie d'un système de chauffage situé à l'extérieur de celle-ci,
- la Figure 2 est une représentation en coupe d'un autre mode de réalisation de la poche de feuilletage selon l'invention, cette poche étant munie d'un premier dispositif de chauffage et d'un premier moyen d'isolation thermique situés à l'intérieur de celle-ci.
- la Figure 3 est une représentation en coupe d'un autre mode de réalisation de la poche de feuilletage selon l'invention, cette poche étant munie d'un premier dispositif de chauffage et de premier et second moyens d'isolation thermique situés à l'intérieur de celle-ci.

### EXEMPLE 1

### POCHE AVEC DISPOSITIF DE CHAUFFAGE A L'EXTERIEUR

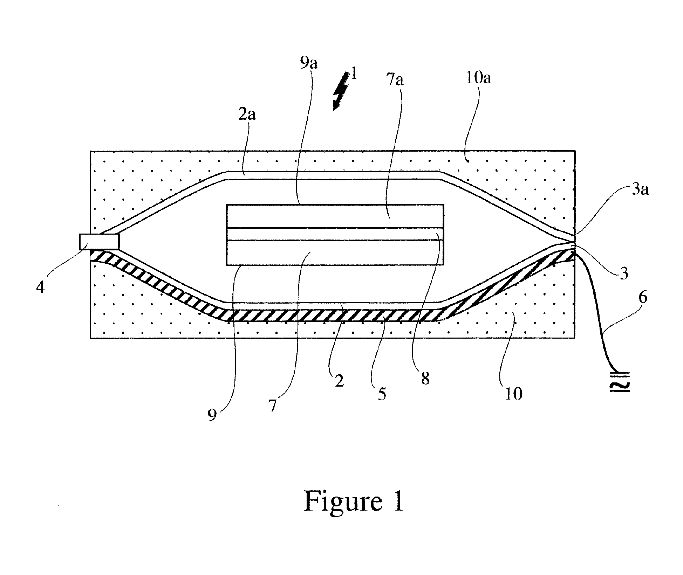

Tel que représenté à la Figure 1, la poche de feuilletage 1 comprend la première paroi extérieure 2 et la seconde paroi extérieure 2a solidarisées au niveau des rives 3, 3a. Cette poche présente, en outre, un embout 4 susceptible d'être raccordé à une pompe à vide (non représentée) tandis que la face extérieure de la paroi 2 supporte un tapis chauffant souple 5 qui peut être raccordé, par l'intermédiaire du câble électrique 6, à une source de courant électrique. La Figure 1 montre également une structure multi-couches comprenant les feuilles de matériaux 7, 7a, 8 qui délimitent les première et seconde faces latérales respectivement 9 et 9a de cette structure. D'autre part, l'ensemble formé par cette poche munie de son tapis chauffant est recouvert d'une première et d'une seconde enveloppes respectivement 10 et 10a d'isolation thermique.

A la lumière de ce qui précède, on observe qu'une utilisation de cette poche nécessite d'abord d'y introduire, les feuilles de matériaux 7, 7a, 8 à assembler, par exemple verre/PVB, composites, ou autres, ensuite de refermer celle-ci de façon étanche et de raccorder l'embout 4 à une pompe à vide pour éliminer, sous vide contrôlé, les gaz présents dans cette poche. On referme alors l'ensemble formé par les première et seconde enveloppes isolantes et on commence le chauffage de la poche par paliers de température selon un cycle adapté aux matériaux à assembler. A titre d'exemple, l'assemblage de deux feuilles de verre 7, 7a chacune d'une épaisseur de 3 mm avec une feuille 8 de 0,4 mm d'EVA nécessite d'élever la température à l'intérieur de la poche jusqu'à 120°C pendant environ 30 min avec un palier d'environ 15 min à 80°C pour compléter le dégazage de cette poche.

### EXEMPLE 2

### POCHE AVEC DISPOSITIF DE CHAUFFAGE A L'INTERIEUR

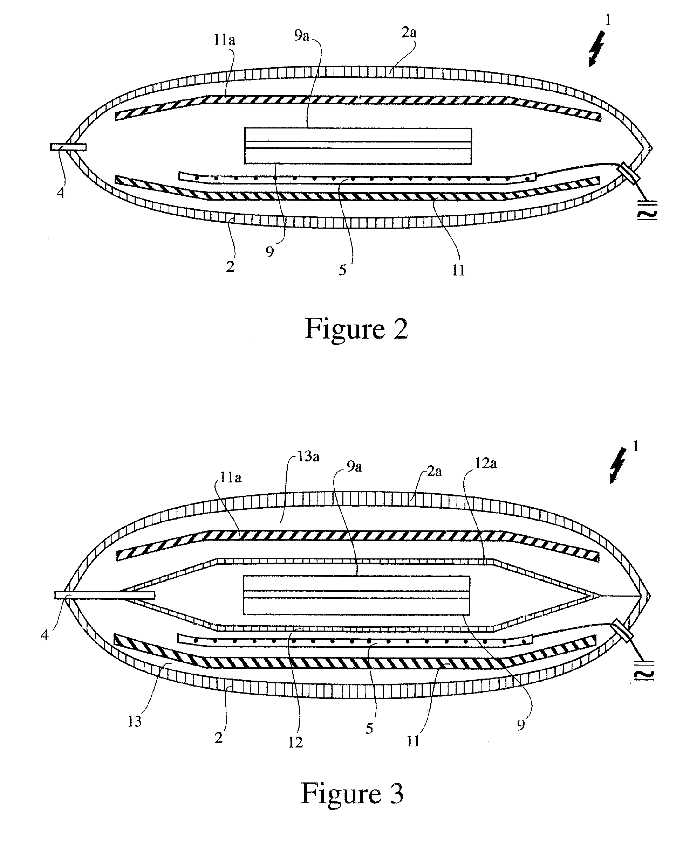

Tel que représenté à la Figure 2, la poche de feuilletage 1 comprend, comme à la Figure 1, la première paroi extérieure 2, la seconde paroi extérieure 2a et l'embout 4. Le tapis chauffant souple 5, quant à lui, est situé à l'intérieur de cette poche tandis qu'une première feuille 11 d'isolation thermique sépare ce tapis chauffant de la paroi 2. La face, de cette feuille isolante, en contact avec cette paroi 2 présente, en outre, une structure gaufrée non représentée. D'autre part, une seconde feuille d'isolation thermique, soit 11a, est disposée à l'intérieur de la poche en juxtaposition à la paroi 2a.

### EXEMPLE 3

### POCHE AVEC DISPOSITIF DE CHAUFFAGE A L'INTERIEUR

Tel que représenté à la Figure 3, la poche de feuilletage 1 comprend, comme à la Figure 2, la première paroi extérieure 2, la seconde paroi extérieure 2a et l'embout 4. Le tapis chauffant souple 5, quant à lui, est situé à l'intérieur de cette poche tandis qu'une première feuille 11 d'isolation thermique sépare ce premier dispositif de chauffage de la paroi 2. La Figure 3 montre, par ailleurs, qu'une première paroi intérieure 12, issue du pourtour de la première paroi 2, vient compléter un premier logement 13 pour ce premier tapis chauffant et cette première feuille isolante. D'autre part, une seconde paroi intérieure 12a, provenant du pourtour de la seconde paroi 2a, crée un second logement 13a pour une seconde feuille 11a d'isolation thermique juxtaposée à cette paroi 2a. La face, de ces feuilles isolantes 11 et 11a en contact respectivement avec les paroi 2 et 2a de la poche, présentent, en outre, une structure gaufrée non représentée.

Comparativement aux méthodes traditionnelles faisant appel à un chauffage de la poche par convection en autoclave, le procédé de feuilletage selon l'invention présente de nombreux avantages. En effet, ce procédé permet:
- une augmentation précise, rapide et mieux contrôlée de la température,
- un meilleur transfert de chaleur,
- une perte diminuée d'énergie,
- une consommation inférieure en énergie,
- une grande autonomie d'utilisation.

De plus, par rapport à la méthode décrite dans la demande de brevet EP0331648 citée précédemment qui envisage également un chauffage par conduction de la poche, le procédé selon l'invention requiert une consommation moindre d'énergie suite au chauffage d'une seule paroi de la structure multi-couches. Par ailleurs, ce procédé a également pour avantage d'augmenter la durée de vie de la poche comparativement à la durée de vie d'une poche dont on envisagerait de chauffer, en même temps, les deux parois par le biais d'un système de chauffage juxtaposé extérieurement.

Comparativement au système pour le feuilletage décrit dans la demande de brevet EP0331648, la poche selon l'invention présente une plus grande souplesse d'utilisation puisqu'il permet de réaliser l'assemblage d'éléments recourbés.

On retiendra également que la poche selon l'invention est entièrement autonome puisqu'il ne fait pas appel à l'utilisation d'étuve, d'autoclave ou de système de chauffage externe. En outre, sa maintenance est très aisée car chaque élément qui le compose peut être réparé ou remplacé séparément et avec facilité. D'autre part, cette poche présente une grande souplesse de mise en oeuvre puisque le système de chauffage peut se trouver à l'intérieur ou à l'extérieur de la poche. En outre, cette poche est aisément transportable et ne requiert qu'un minimum d'énergie pour sa mise en oeuvre au contraire des poches de feuilletage généralement utilisées lesquelles sont très volumineuses, non transportables et nécessitent une grande consommation d'énergie.

## Revendications

1. Procédé pour l'assemblage de feuilles (7, 7a, 8) de matériaux en une structure multi-couches comprenant une première et une seconde faces latérales (9, 9a), en particulier une structure formée de une ou plusieurs unités comprenant chacune deux feuilles de matériaux situées de part et d'autre d'une couche adhésive, ce procédé nécessitant un chauffage sous vide dans une poche (1) étanche et autonome comprenant une première et une seconde parois extérieures souples (2, 2a) assemblées en un contenant, **caractérisé en ce qu'**une seule desdites faces latérales de la structure multi-couches est chauffée jusqu'à une température compatible avec le feuilletage des matériaux à assembler.

2. Procédé selon la revendication 1, **caractérisé en ce que** la face latérale (9) de la structure multi-couches est chauffée par l'intermédiaire d'une paroi supplémentaire (12) qui s'étend à l'intérieur de cette poche, cette paroi supplémentaire étant disposée entre cette face latérale de la structure multi-couches et une source (5) productrice de chaleur située à l'intérieur de ladite poche.

3. Procédé selon la revendication 1, **caractérisé en ce que** la face latérale (9) de la structure multi-couches est chauffée sans intermédiaire disposé entre elle et une source (5) productrice de chaleur située à l'intérieur de ladite poche.

4. Procédé selon la revendication 1, **caractérisé en ce que** la face latérale (9) de la structure multi-couches est chauffée par l'intermédiaire d'une paroi extérieure (2) de la poche située en regard de cette face latérale, cette paroi extérieure de la poche étant en contact avec une source (5) productrice de chaleur située à l'extérieur de ladite poche ou contenue dans cette paroi extérieure.

5. Procédé selon la revendication 2 ou 4, **caractérisé en ce que** la paroi extérieure de la poche ou la paroi qui s'étend à l'intérieur de celle-ci est chauffée sur la totalité de sa surface.

6. Procédé selon la revendication 2 ou 4, **caractérisé en ce que** la paroi extérieure de la poche ou la paroi qui s'étend à l'intérieur de celle-ci est chauffée sur au moins une portion de sa surface.

7. Poche (1) étanche et autonome comprenant une première et une seconde parois extérieures souples (2, 2a) assemblées en un contenant, pour la mise en oeuvre de la méthode selon l'une des revendications 1 à 6, **caractérisée en ce qu'**elle comporte un premier dispositif (5) de chauffage étant solidarisé à ladite poche ou disposé à l'intérieur de ladite poche en regard de la première paroi extérieure ou encore intégré auxdites parois extérieures souples et étant apte à chauffer la première face latérale (9) de la structure multi-couches et éventuellement un second dispositif apte à chauffer la seconde face latérale (9a) de la structure multi-couches, étant entendu que les deux dispositifs de chauffage ne peuvent fonctionner en même temps.

8. Poche selon la revendication 7, **caractérisée en ce qu'**elle comporte, à l'extérieur d'elle-même, un premier dispositif de chauffage (5) situé en regard de la première paroi extérieure (2) et éventuellement un second dispositif de chauffage situé en regard de la seconde paroi extérieure (2a), étant entendu que les deux dispositifs de chauffage ne peuvent fonctionner en même temps.

9. Poche selon la revendication 8, **caractérisée en ce qu'**elle comporte :
a) un premier dispositif de chauffage (5) :
**soit** solidarisé à la première paroi extérieure (5) par l'intermédiaire d'un moyen de fixation approprié et éventuellement recouvert par une première enveloppe (10) d'isolation thermique,
**soit** maintenu dans une première pochette souple, éventuellement amovible, solidarisée à cette poche par le biais d'un moyen de fixation approprié, cette pochette comportant une portion de paroi non en contact avec ladite poche,
**soit** maintenu dans une première pochette formée par une portion de la première paroi extérieure de la poche et par un feuillet souple solidarisé à cette portion de paroi extérieure,
cette pochette contenant éventuellement un premier moyen d'isolation thermique disposé entre le premier dispositif de chauffage et ladite portion de paroi non en contact avec la poche ou entre le premier dispositif de chauffage et le feuillet,
et éventuellement :
b) un second dispositif de chauffage :
**soit** solidarisé à la seconde paroi extérieure par l'intermédiaire d'un moyen de fixation approprié et éventuellement recouvert par une seconde enveloppe d'isolation thermique,
**soit** maintenu dans une seconde pochette souple, éventuellement amovible, solidarisée à cette poche par le biais d'un moyen de fixation approprié, cette pochette comportant une portion de paroi non en contact avec la poche,
**soit** maintenu dans une seconde pochette formée par une portion de la seconde paroi extérieure de la poche et par un feuillet souple solidarisé à cette portion de paroi extérieure,
cette pochette contenant éventuellement un second moyen d'isolation thermique disposé entre le second dispositif de chauffage et ladite portion de paroi non en contact avec la poche ou entre le second dispositif de chauffage et le feuillet, étant entendu que les deux dispositifs de chauffage ne peuvent fonctionner en même temps.

10. Poche selon la revendication 7, **caractérisée en ce qu'**elle comporte, à l'intérieur d'elle-même, un premier dispositif de chauffage (5) situé en regard de la première paroi extérieure et éventuellement un second dispositif de chauffage situé en regard de la seconde paroi extérieure, étant entendu que les deux dispositifs de chauffage ne peuvent fonctionner en même temps.

11. Poche selon la revendication 10, **caractérisée en ce qu'**elle comporte :
- un premier dispositif de chauffage (5) juxtaposé à la première paroi extérieure ou séparé de celle-ci par un premier moyen (11) d'isolation thermique et éventuellement une première paroi (12) supplémentaire qui s'étend, à l'intérieur de cette poche, à partir du pourtour de cette première paroi extérieure formant ainsi un premier logement (13) pour ce premier dispositif de chauffage et, lorsqu'il est présent, ce premier moyen d'isolation thermique,
et éventuellement :
- un second dispositif de chauffage ou un second moyen d'isolation thermique, l'un ou l'autre juxtaposé à la seconde paroi extérieure, ou un second dispositif de chauffage séparé de celle-ci par un second moyen (11a) 5 d'isolation thermique, et éventuellement une seconde paroi (12a) supplémentaire qui s'étend, à l'intérieur de cette poche, à partir du pourtour de cette seconde paroi extérieure formant ainsi un second logement (13a) pour ce second dispositif de chauffage et/ou ce second moyen d'isolation thermique, étant entendu que les deux dispositifs de chauffage ne peuvent fonctionner en même temps.

12. Poche selon la revendication 7, **caractérisée en ce qu'**elle comporte un premier dispositif de chauffage situé à l'intérieur de sa première paroi extérieure et éventuellement un second dispositif de chauffage situé à l'intérieur de sa seconde paroi extérieure, étant entendu que les deux dispositifs de chauffage ne peuvent fonctionner en même temps.

13. Poche selon la revendication 12, **caractérisée en ce qu'**elle comporte :
- un premier dispositif de chauffage situé à l'intérieur de sa première paroi extérieure, cette paroi extérieure contenant éventuellement un premier moyen d'isolation thermique disposé entre le premier dispositif de chauffage et la portion de première paroi extérieure orientée vers l'extérieur de cette poche,
et éventuellement :
- un second dispositif de chauffage situé à l'intérieur de sa seconde paroi extérieure, cette paroi extérieure contenant éventuellement un second moyen d'isolation thermique disposé entre le second dispositif de chauffage et la portion de seconde paroi extérieure orientée vers l'extérieur de cette poche, étant entendu que les deux dispositifs de chauffage ne peuvent fonctionner en même temps.

14. Poche selon l'une des revendications 7 à 13, **caractérisée en ce que** les premier et second dispositifs de chauffage se présentent chacun sous la forme d'un contenant souple qui loge un ou plusieurs éléments chauffants souples.

15. Poche selon l'une des revendications 7 à 14, **caractérisée en ce que** les premier et second dispositifs de chauffage comprennent chacun plusieurs éléments de chauffe individuels lesquels peuvent être soit réunis en série soit réunis en parallèle de façon à chauffer individuellement différentes portions de la paroi à chauffer.

## Patentansprüche

1. Verfahren zum Zusammenfügen von Materialblättern (7, 7a, 8) in einer mehrschichtigen Struktur, umfassend eine erste und eine zweite Seitenfläche (9, 9a), insbesondere in einer Struktur, die von einer oder mehreren Einheiten gebildet ist, umfassend jeweils zwei Materialblätter, die sich beiderseits einer Haftschicht befinden, wobei dieses Verfahren eine Erhitzung unter Vakuum in einer dichten und autonomen Tasche (1) erfordert, umfassend eine erste und eine zweite flexible Außenwand (2, 2a), die zu einem Behältnis verbunden sind, **dadurch gekennzeichnet, dass** nur eine der Seitenflächen der mehrschichtigen Struktur auf eine mit der Folierung der zu verbindenden Materialien kompatible Temperatur erhitzt wird.

2. Verfahren nach Anspruch 1, **dadurch gekennzeichnet, dass** die Seitenfläche (9) der mehrschichtigen Struktur mit Hilfe einer zusätzlichen Wand (12) erhitzt wird, die sich im Inneren dieser Tasche erstreckt, wobei diese zusätzliche Wand zwischen dieser Seitenfläche der mehrschichtigen Struktur und einer Wärme erzeugenden Quelle (5), die sich im Inneren der Tasche befindet, angeordnet ist.

3. Verfahren nach Anspruch 1, **dadurch gekennzeichnet, dass** die Seitenfläche (9) der mehrschichtigen Struktur ohne Zwischenschicht, die zwischen ihr und einer Wärme erzeugenden Quelle (5), die sich im Inneren der Tasche befindet, angeordnet ist, erhitzt wird.

4. Verfahren nach Anspruch 1, **dadurch gekennzeichnet, dass** die Seitenfläche (9) der mehrschichtigen Struktur mit Hilfe einer Außenwand (2) der Tasche, die sich gegenüber dieser Seitenfläche befindet, erhitzt wird, wobei diese Außenwand der Tasche mit einer Wärme erzeugenden Quelle (5) in Kontakt ist, die sich außerhalb der Tasche befindet oder in dieser Außenwand enthalten ist.

5. Verfahren nach Anspruch 2 oder 4, **dadurch gekennzeichnet, dass** die Außenwand der Tasche oder die Wand, die sich im Inneren derselben erstreckt, auf der Gesamtheit ihrer Oberfläche erhitzt wird.

6. Verfahren nach Anspruch 2 oder 4, **dadurch gekennzeichnet, dass** die Außenwand der Tasche oder die Wand, die sich im Inneren derselben erstreckt, auf zumindest einem Abschnitt ihrer Oberfläche erhitzt wird.

7. Dichte und autonome Tasche (1), umfassend eine erste und eine zweite flexible Außenwand (2, 2a), die zu einem Behältnis verbunden sind, für den Einsatz der Methode nach einem der Ansprüche 1 bis 6, **dadurch gekennzeichnet, dass** sie einer erste Vorrichtung (5) zur Erhitzung umfasst, die mit der Tasche verbunden oder im Inneren der Tasche gegenüber der ersten Außenwand angeordnet oder auch in die flexiblen Außenwände integriert ist und geeignet ist, die erste Seitenfläche (9) der mehrschichtigen Struktur zu erhitzen, und eventuell eine zweite Vorrichtung umfasst, die geeignet ist, die zweite Seitenfläche (9a) der mehrschichtigen Struktur zu erhitzen, wobei es sich versteht, dass die beiden Erhitzungsvorrichtungen nicht gleichzeitig funktionieren können.

8. Tasche nach Anspruch 7, **dadurch gekennzeichnet, dass** sie außerhalb von sich selbst eine erste Erhitzungsvorrichtung (5), die sich gegenüber der ersten Außenwand (2) befindet, und eventuell eine zweite Erhitzungsvorrichtung umfasst, die sich gegenüber der zweiten Außenwand (2a) befindet, wobei es sich versteht, dass die beiden Erhitzungsvorrichtungen nicht gleichzeitig funktionieren können.

9. Tasche nach Anspruch 8, **dadurch gekennzeichnet, dass** sie umfasst:
a) eine erste Erhitzungsvorrichtung (5):
entweder verbunden mit der ersten Außenwand (5) durch ein geeignetes Befestigungsmittel und eventuell verkleidet mit einem ersten Wärmeisoliermantel (10),
oder in einer ersten flexiblen Hülle gehalten, die eventuell abnehmbar und mit dieser Tasche durch ein geeignetes Befestigungsmittel verbunden ist, wobei diese Hülle einen Wandabschnitt umfasst, der nicht mit der Tasche in Kontakt ist,
oder in einer ersten Hülle gehalten, die von einem Abschnitt der ersten Außenwand der Tasche und einem flexiblen Blatt, das mit diesem Außenwandabschnitt verbunden ist, gebildet ist,
wobei diese Hülle eventuell ein erstes Wärmeisoliermittel, das zwischen der ersten Erhitzungsvorrichtung und dem Wandabschnitt, der nicht mit der Tasche in Kontakt ist, oder zwischen der ersten Erhitzungsvorrichtung und dem Blatt angeordnet ist, enthält,
und eventuell
b) eine zweite Erhitzungsvorrichtung:
entweder verbunden mit der zweiten Außenwand durch ein geeignetes Befestigungsmittel und eventuell verkleidet mit einem zweiten Wärmeisoliermantel,
oder in einer zweiten flexiblen Hülle gehalten, die eventuell abnehmbar und mit dieser Tasche durch ein geeignetes Befestigungsmittel verbunden ist, wobei diese Hülle einen Wandabschnitt umfasst, der nicht mit der Tasche in Kontakt ist,
oder in einer zweiten Hülle gehalten, die von einem Abschnitt der zweiten Außenwand der Tasche und einem flexiblen Blatt, das mit diesem Außenwandabschnitt verbunden ist, gebildet ist,
wobei diese Hülle eventuell ein zweites Wärmeisoliermittel, das zwischen der zweiten Erhitzungsvorrichtung und dem Wandabschnitt, der nicht mit der Tasche in Kontakt ist, oder zwischen der zweiten Erhitzungsvorrichtung und dem Blatt angeordnet ist, enthält, wobei es sich versteht, dass die beiden Erhitzungsvorrichtungen nicht gleichzeitig funktionieren können.

10. Tasche nach Anspruch 7, **dadurch gekennzeichnet, dass** sie in ihrem Inneren eine erste Erhitzungsvorrichtung (5), die gegenüber der ersten Außenwand angeordnet ist, und eventuell eine zweite Erhitzungsvorrichtung umfasst, die gegenüber der zweiten Außenwand angeordnet ist, wobei es sich versteht, dass die beiden Erhitzungsvorrichtungen nicht gleichzeitig funktionieren können.

11. Tasche nach Anspruch 10, **dadurch gekennzeichnet, dass** sie umfasst:
- eine erste Erhitzungsvorrichtung (5), die neben der ersten Außenwand angeordnet oder von dieser durch ein erstes Wärmeisoliermittel (11) getrennt ist, und eventuell eine erste zusätzliche Wand (12), die sich im Inneren dieser Tasche vom Umfang dieser ersten Außenwand aus erstreckt und so eine erste Lagerung (13) für diese erste Erhitzungsvorrichtung und, falls vorhanden, dieses erste Wärmeisoliermittel bildet,
und eventuell:
- eine zweite Erhitzungsvorrichtung und ein zweites Wärmeisoliermittel, die beide neben der zweiten Außenwand angeordnet sind, oder eine zweite Erhitzungsvorrichtung, die von dieser durch ein zweites Wärmeisoliermittel (11a) getrennt ist, und eventuell eine zweite zusätzliche Wand (12a), die sich im Inneren dieser Tasche vom Umfang dieser zweiten Außenwand aus erstreckt und so eine zweite Lagerung (13)a für diese zweite Erhitzungsvorrichtung und/oder dieses zweite Wärmeisoliermittel bildet, wobei es sich versteht, dass die beiden Erhitzungsvorrichtungen nicht gleichzeitig funktionieren können.

12. Tasche nach Anspruch 7, **dadurch gekennzeichnet, dass** sie eine erste Erhitzungsvorrichtung, die innerhalb ihrer ersten Außenwand angeordnet ist, und eventuell eine zweite Erhitzungsvorrichtung umfasst, die innerhalb ihrer zweiten Außenwand angeordnet ist, wobei es sich versteht, dass die beiden Erhitzungsvorrichtungen nicht gleichzeitig funktionieren können.

13. Tasche nach Anspruch 12, **dadurch gekennzeichnet, dass** sie umfasst:
- eine erste Erhitzungsvorrichtung, die sich innerhalb ihrer ersten Außenwand befindet, wobei diese Außenwand eventuell ein erstes Wärmeisoliermittel umfasst, das zwischen der ersten Erhitzungsvorrichtung und dem Abschnitt der ersten Außenwand, der nach außen zu dieser Tasche gewandt ist, angeordnet ist,
und eventuell:
- eine zweite Erhitzungsvorrichtung, die sich innerhalb ihrer zweiten Außenwand befindet, wobei diese Außenwand eventuell ein zweites Wärmeisoliermittel umfasst, das zwischen der zweiten Erhitzungsvorrichtung und dem Abschnitt der zweiten Außenwand, der nach außen zu dieser Tasche gewandt ist, angeordnet ist, wobei es sich versteht, dass die beiden Erhitzungsvorrichtungen nicht gleichzeitig funktionieren können.

14. Tasche nach einem der Ansprüche 7 bis 13, **dadurch gekennzeichnet, dass** die ersten und zweiten Erhitzungsvorrichtungen jeweils in Form eines flexiblen Behältnisses vorhanden sind, in dem ein oder mehrere flexible Heizelemente angeordnet sind.

15. Tasche nach einem der Ansprüche 7 bis 14, **dadurch gekennzeichnet, dass** die ersten und zweiten Erhitzungsvorrichtungen jeweils mehrere individuelle Heizelemente umfassen, die entweder in Serie verbunden oder parallel verbunden sein können, um verschiedene Abschnitte der zu erhitzenden Wand individuell zu erhitzen.

## Claims

1. A method of assembling sheets (7, 7a, 8) of material into a multilayer structure comprising first and second lateral faces (9, 9a), in particular a structure formed by one or more units, each comprising two sheets of material situated on either side of a layer of adhesive, the method requiring vacuum heating in a leaktight and independent pouch (1) having first and second flexible outside walls (2, 2a) assembled to make a container, the method being **characterized in that** only one of said lateral faces of the multilayer structure is heated up to a temperature compatible with laminating the materials that are to be assembled.

2. A method according to claim 1, **characterized in that** the lateral face (9) of the multilayer structure is heated by means of an additional wall (12) that extends inside the pouch, the additional wall being arranged between the lateral face of the multilayer structure and a heat-producing source (5) situated inside said pouch.

3. A method according to claim 1, **characterized in that** the lateral face (9) of the multilayer structure is heated without an intermediary arranged between itself and a heat-producing source (5) situated inside said pouch.

4. A method according to claim 1, **characterized in that** the lateral face (9) of the multilayer structure is heated by means of an outside wall (2) of the pouch situated facing the lateral face, the outside wall of the pouch being in contact with a heat-producing source (5) situated outside said pouch or contained in said outside wall.

5. A method according to claim 2 or claim 4, **characterized in that** the outside wall of the pouch or the wall that extends inside it is heated over its entire surface area.

6. A method according to claim 2 or claim 4, **characterized in that** the outside wall of the pouch or the wall that extends inside it is heated over at least a fraction of its surface area.

7. A leaktight and independent pouch (1) comprising first and second flexible outside vvalls (2, 2a) that are assembled together as a container, in order to perform the method according to any one of claims 1 to 6, the pouch being **characterized in that** it includes a first heater device (5) that is secured to said pouch or that is arranged inside said pouch facing the first outside wall or indeed that is incorporated in said flexible outside walls and is suitable for heating the first lateral face (9) of the multilayer structure and possibly a second device suitable for heating the second lateral face (9a) of the multilayer structure, it being understood that the two heater devices cannot operate at the same time.

8. A pouch according to claim 7, **characterized in that** it includes, on its outside, a first heater device (5) situated facing the first outside wall (2) and optionally a second heater device situated facing the second outside wall (2a), it being understood that the two heater devices cannot operate at the same time.

9. A pouch according to claim 8, **characterized in that** it comprises:
a) a first heater device (5):
that is secured to the first outside wall (5) via at least one appropriate fastening and that is optionally covered in a first thermal insulation envelope (10);
that is held in a first flexible pocket that is optionally removable, and that is secured to said pouch via appropriate fastener means, the pocket including a wall portion that is not in contact with said pouch; and
that is held in a first pocket formed by a portion of the first outside wall of the pouch and by a flexible sheet secured to said outside wall portion;
the pocket optionally containing first thermal insulation means arranged between the first heater device and said wall portion not in contact with the pouch or between the first heater device and the sheet, and optionally:
b) a second heater device:
that is secured to the second outside wall by suitable fastener means and that is optionally covered by a second thermal insulation envelope;
that is held in a second flexible pocket that is optionally removable and that is secured to said pouch by appropriate fastener means, said pocket including a wall portion that is not in contact with the pouch; and
that is held in a second pocket formed by a portion of the second outside wall of the pouch and by a flexible sheet secured to this outside wall portion;
the pocket optionally containing second thermal insulation means arranged between the second heater device and said wall portion not in contact with the pouch or between the second heater device and the sheet, it being understood that the two heater devices cannot operate at the same time.

10. A pouch according to claim 7, **characterized in that** it includes, inside itself, a first heater device (5) situated facing the first outside wall and optionally a second heater device situated facing the second outside wall, it being understood that the two heater devices cannot operate at the same time.

11. A pouch according to claim 10, **characterized in that** it includes:
· a first heater device (5) juxtaposed with the first outside wall or separated therefrom by first thermal insulation means (11) and optionally a first additional wall (12) that extends inside the pouch from the periphery of said first outside wall, thereby forming a first housing (13) for the first heater device and, when present, the first thermal insulation means;
and optionally:
· a second heater device or second thermal insulation means, one or the other being juxtaposed with the second outside wall, or a second heater device separated therefrom by second thermal insulation means (11a), and optionally a second additional wall (12a) that extends inside the pouch from the periphery of said second outside wall, thereby forming a second housing (13a) for the second heater device and/or the second thermal insulation means, it being understood that the two heater devices cannot operate at the same time.

12. A pouch according to claim 7, **characterized in that** it includes a first heater device situated inside its first outside wall and optionally a second heater device situated inside its second outside wall, it being understood that the two heater devices cannot operate at the same time.

13. A pouch according to claim 12, **characterized in that** it includes:
· a first heater device situated inside its first outside wall, this outside wall optionally containing first thermal insulation means arranged between the first heater device and the portion of the first outside wall that faces towards the outside of said pouch;
and optionally:
· a second heater device situated inside its second outside wall, this outside wall optionally containing second thermal insulation means arranged between the second heater device and the portion of the second outside wall that faces towards the outside of the pouch, it being understood that the two heater devices cannot operate at the same time.

14. A pouch according to any one of claims 7 to 13, **characterized in that** the first and second heater devices are each in the form of a flexible container housing one or more flexible heater elements.

15. A pouch according to any one of claims 7 to 14, **characterized in that** each of the first and second heater devices comprises a plurality of individual heater elements that may be connected either in series or else in parallel so as to heat different portions of the wall for heating individually.
